# EUROPÄISCHE PATENTSCHRIFT

(11) **EP 0 518 816 B1**
(45) Veröffentlichungstag und Bekanntmachung des Hinweises auf die Patenterteilung: **09.08.1995**
(21) Anmeldenummer: 92810416.5
(22) Anmeldetag: 29.05.1992
(51) Int. Cl.: D05B 19/00, G05B 19/408

(54) **Vorrichtung zum Generieren und Programmieren von Stichmustern**
Apparatus for generating and programming stitch pattern
Dispositif pour la génération et la programmation de motifs de couture

(30) Priorität: 10.06.1991 CH 1731/91
(43) Veröffentlichungstag der Anmeldung: 16.12.1992
(73) Patentinhaber: FRITZ GEGAUF AG BERNINA-NÄHMASCHINENFABRIK, CH-8266 Steckborn (CH)
(72) Erfinder: Hausammann, Erich, CH-8272 Ermatingen (CH); Nufer, Karl, CH-8266 Steckborn (CH)
(74) Vertreter: AMMANN PATENTANWAELTE AG BERN

(56) Entgegenhaltungen:
- EP-A- 0 418 643
- DE-A- 3 833 605
- US-A- 4 429 364
- US-A- 4 648 341
- US-A- 4 998 489
- US-A- 5 005 500

## Beschreibung

Die Erfindung betrifft eine Vorrichtung zum Generieren und Programmieren selbst erstellter Stichmuster für eine Näh- oder Stickmaschine.

Folgende Verfahren bzw. Vorrichtungen zum Erstellen eigener Stichmusterkreationen durch die Bedienungsperson einer Nähmaschine sind bekannt:
- Eingeben von Stich-Koordinaten mittels Matrixtafeln, die entweder aus direkt betätigbaren Schaltern bestehen (US 4 144 827, Singer) oder Schaltpunkte enthalten, welche mit einem Setzstift aktiviert werden müssen (US 4 142 472, Yamamoto). Die den Koordinatenpunkten auf der Tafel entsprechenden Stichdaten werden in einem Stichmusterspeicher gespeichert und dienen zum Steuern der Nähwerkzeuge einer Näh- oder Stickmaschine, um das gewünschte Stichmuster herzustellen.
   Diese Art der Stichmustereingabe ist mühsam und umständlich. Die Bedienungsperson muss irgendwelche Hilfsmittel verwenden, damit sie den Überblick über den Eingabevorgang nicht verliert und die Stichkoordinaten und die Steuerbefehle für Vorwärts- oder Rückwärtstransport in der richtigen Reihenfolge eingibt. Besonders schwierig ist der Vorgang gemäß US 4 142 472, weil die Daten für den Stoffvor- oder -rückschub in separaten Matrixfeldern eingegeben werden müssen. Für die Eingabe einfacher Stichmuster, z. B. Abwandlungen von Zickzackstichen, oder von sogenannten Nutznähten können derartige Eingabemöglichkeiten zur Not genügen. Viele Bedienungspersonen dürften damit aber nur schwer oder gar nicht zurechtkommen.
- Eingeben von Stichkoordinaten in Form von digitalen Datenwörtern, wobei die Datenwörter für die Nadelseitwärtsbewegung und den Vor- oder Rückwärtstransport des Nähgutes mit Hilfe einer externen Mustertafel oder einer Eingabevorrichtung für digitale Signale eingegeben werden (US 4 092 938, Singer).
   Auch diese Eingabemöglichkeit für selbsterstellte Stichmuster ist mühsam und zeitraubend. Fehlerhafte Eingaben sind geradezu vorprogrammiert. Etwas einfacher ist die Eingabe mit Hilfe der Mustertafel gemäß Fig. 7. Diese eignet sich aber ebenfalls nur für die Eingabe relativ einfacher Zickzackmuster.
- Eingeben von Stichkoordinaten und weiterer für die Stichmustererstellung wichtiger Betriebsinformationen mit Hilfe eines Abtaststiftes und einer ebenen Eingabetafel, einer sogenannten Koordinateneingabeeinheit (US 4 429 364, Mitsubishi). Die Eingabetafel ist unterteilt in einen Funktionseingabeteil und einen Mustereingabeteil. Die für die Musterherstellung nötigen Befehlsdaten, wie Stichlänge, Vergrößerungsfaktor etc. werden durch Eingeben der entsprechenden Steuerbefehle und Aktivieren der Digitalanzeigen mit Hilfe des Musters bestimmt und das Muster durch aufeinanderfolgendes Eingeben der Nadeleinstichpunkte auf der Koordinateneingabeeinheit aufgezeichnet. Der Aufzeichnungsvorgang kann auf einem Bildschirm verfolgt werden, auf welchem auch die eingegebenen Befehlsdaten sichtbar sind.
   Diese Eingabemöglichkeit für ein Steuerprogramm zur Herstellung eines Nähmusters ist für die Herstellung von Einzelteilen zu Bekleidungsstücken auf automatischen Nähmaschinen vorgesehen. Der Eingabevorgang ist arbeitsintensiv und stellt relativ hohe fachliche Anforderungen an eine Bedienungsperson, obwohl die zu programmierenden Nähmuster verhältnismäßig einfach sind. Eine derartige Eingabemöglichkeit könnte sich für die Programmierung von einfachen Zickzack- oder Zierstichmustern noch bedingt eignen, sie ist aber für die Programmierung von bildhaften Stichmustern, wie sie zum Beispiel auf einer Nähmaschine mit gesteuertem Seitwärtstransport oder gesteuertem Stickrahmen herstellbar sind, weniger geeignet. Siehe auch Dokument EP-A-0 418 643.
- Eingeben von Steuerinformationen in ein externes Speichermedium zum Steuern des Stickrahmens einer automatischen Stickmaschine (US 4 290 375, Janome), wobei als Eingabemittel ein mit einem HF-Generator verbundenes Handstück und eine Koordinatenbestimmungstafel vorgesehen sind.

Zum Herstellen eigener Näh- oder Stickmuster wird eine zusätzliche, von der Nähmaschine getrennte Eingabevorrichtung benötigt. Die Stichmusterkoordinaten werden in Form von Digitalsignalen auf einen Datenträger aufgezeichnet, der dann in einen mit der Nähmaschine verbundenen Leser eingeschoben wird. Abgesehen davon, daß Haushaltsnähmaschinen üblicherweise nicht mit Aufnahmevorrichtungen für externe Datenträger ausgerüstet sind, ist die Anschaffung eines speziellen Koordinateneigabe- und -digitalisiergerätes ziemlich kostspielig und für nur gelegentlichen Gebrauch wenig sinnvoll.

Alle vorgenannten Verfahren und Vorrichtungen zum Erstellen eigener Stichmusterkreationen haben außer den bereits genannten Nachteilen noch den gemeinsamen großen Nachteil, daß damit die freie Generierung und Programmierung von bildhaften Stichmustern, welche der eigenen Fantasie entspringen, äußerst schwierig ist. Die Programmierung erfolgt daher gewöhnlich unter Zuhilfenahme von Mustervorlagen, z. B. Schnittmustern, Zeichnungsvorlagen etc. . Aber selbst dann erfordert das "freihändige" Programmieren von Eigenkreationen ein überdurchschnittliches Vorstellungsvermögen, sehr gute zeichnerische Fähigkeiten und außerdem auch eine ruhige Hand, Bedingungen also, welche in der Regel nur von geübten Personen erfüllt werden.

Mit der erfindungsgemäßen Vorrichtung wird das Kreieren und Programmieren sowie die Realisierung eigener Näh- oder Stickmuster wesentlich erleichtert Die Näh- oder Stickmuster werden in mindestens zwei Phasen erstellt. In einer ersten Phase wird das gewünschte Muster in bekannter Weise mit Hilfe einer Maus, einer Rollkugel ("Trackball") oder eines Steuerknüppels ("Joystick") mit der auf dem Bildschirm bewegten Markierung ("Cursor") oder mit einem Abtaststift auf einem geeigneten Bildschirm aufgezeichnet. Die Stichkoordinaten werden in einem Zwischenspeicher gespeichert.

In einer zweiten Phase wird das als Handskizze auf dem Bildschirm festgehaltene Muster überarbeitet, in die endgültige Form gebracht und die Stichfolgen, Stichabstände etc. festgelegt. Diese Überarbeitung kann entweder direkt auf dem von Hand eingegebenen Stichmuster erfolgen oder das handskizzierte Stichmuster kann, um die Übersicht zu verbessern, vom Zwischenspeicher abgerufen und auf einen zweiten, speziell für die Musterbereinigung geeigneten Bildschirm übertragen werden. Die Bedienungsperson hat dabei immer wieder die Möglichkeit, sich an der unveränderten Handskizze des Musters zu orientieren, während sie das Muster sozusagen über dem als Grobvorlage dienenden Handmuster auf dem zweiten Bildschirm erstellt.

Die definitive Mustererstellung erfolgt nun vorzugsweise mit Hilfe einer Maus, einer Rollkugel oder eines Joysticks. Möglich wäre aber auch eine Koordinateneingabe mit Hilfe einer Tastatur ("Keyboard"). Dabei wird der auf dem Bildschirm bewegliche Cursor zuerst auf den als Anfangspunkt des Stichmusters vorgesehen Koordinatenpunkt gestellt. Der Punkt wird mit einem "Klick", d. h. durch Betätigen der dafür vorgesehenen Taste fixiert und, nachdem die gewünschte Stichlänge am normalen Handstellmittel für die Stichlängeneinstellung der Maschine vorgewählt worden ist, kann mit der Bereinigung und Programmierung des definitiven Musters begonnen werden. Die provisorisch gezeichneten Umrißlinien des von Hand eingegebenen Musters werden nun Stich für Stich definitiv festgelegt, wobei die mit dem Cursor und der Rollkugel verbundene Setztaste jeweils gedrückt bleibt, bis der nächste Einstichpunkt der Nadel festgelegt ist. Sobald die Taste freigegeben wird, ist der nächste Punkt wieder fixiert. Besonders vorteilhaft ist dabei der Umstand, daß die zwischen den aufeinanderfolgenen Punkten gezogene, etwas dickere Verbindungslinie vom letzten fixierten Punkt aus entsprechend der Cursorbewegung in beliebiger Richtung und ähnlich einem losen Faden frei beweglich ist und erst mit dem letzten Setzen des folgenden Einstichpunktes durch Loslassen der Setztaste festgelegt wird. Die Bedienungsperson kann somit das Ziehen des Fadens von Einstichpunkt zu Einstichpunkt nachvollziehen. Die Länge der Verbindungslinie entspricht dabei immer höchstens der voreingestellten Stichlänge, außer wenn der nächste Einstichpunkt außerhalb der vorbestimmten Begrenzung der Stickfläche liegen würde. In diesem Falle wird die Länge der Verbindungslinie auf das zwischen dem letzten gesetzten Stich und der Begrenzungslinie bestehende Maß verkürzt.

Um die Eingabe von Einstichpunkten auf Geraden oder Radien zu vereinfachen, genügt die Eingabe der Anfangs- und Endpunkte von Geraden bzw. der Anfangs- und Endpunkte sowie der Bogenhöhe von Kreislinienstücken, um eine entsprechende Stichreihe auf der so definierten Linie festzulegen. Der Abstand zwischen den Anfangs- und Endpunkten der Geraden bzw. der Kreislinienstücke wird in eine ganzzahlige Anzahl von Stichpunkten unterteilt, deren Abstände der vorgewählten Stichänge angenähert sind. Es ist aber auch möglich, "Verbindungsfäden" zwischen zwei Punkten zu ziehen, ohnen daß dazwischen Stich gebildet werden.

Beim Nähen von völlig voneinander getrennten Musterteilen lassen sich Spannfäden (Verbindungsfäden) nicht vermeiden. Falls diese Fäden das Stichbild stören, können sie mit einem Schneidwerkzeug enfernt werden. Vorteilhafterweise werden die Anfangs- und Endpunkte von Mustern oder Musterteilen speziell markiert (z. B. mittel einer Eingabetaste), damit die Maschine an diesen Punkten mehrere Verheftstiche näht. Sobald das bereinigte Stichmuster vollständig eingegeben ist, wird es definitiv abgespeichert und das handskizzierte Stichmuster kann im Zwischenspeicher gelöscht werden.

Bei entsprechendem Ausbau der Rechnerkapazität und der Speichermöglichkeiten wäre es auch möglich, bestimmte geschlossen Abschnitte des Musters mit sogenannten Raupennähten auszunähen, um ein plastischeres Aussehen des Stickmusters zu erzielen. Außerdem könnte auch eine Farbwechselvorrichtung vorgesehen sein, welche das Nähen mehrfarbiger Nähmuster ermöglichen würde.

Selbstverständlich sind bei der Eingabe von Näh- und Stickmustern, mindestens in der zweiten Phase, sämtliche gebräuchlichen Techniken und Hilfsmittel anwendbar, wie z. B. Spiegeln oder Verschieben in Längs- und Querrichtung, Vergrößern ("Zoomen") eines bestimmten Ausschnittes, Drehen um einen bestimmten Bezugspunkt, Musterwiederholung, Rapportverlängerung bei Banddmustern, Kombinieren von Einzelmustern oder Musterteilen, Übereinandernähen verschiedener, z. B. symmetrischer Muster von einem gemeinsamen Bezugspunkt aus, auch mit verschiedenen Farben, zeitweises Auskuppeln der Nadelstange zum Nähen überlanger Stiche und weitere übliche Funktionen.

Weitere vorteilhafte Eigenshaften werden anhand eines Ausführungsbeispiels verdeutlicht, das jedoch den Bereich der Erfindung nicht begrenzt. Dabei zeigen
- Fig. 1:: eine Nähmaschine mit integrierter Entwurfseinheit;
- Fig. 2:: eine Aufsicht auf die Anzeige der Entwurfseinheit in ungefähr natürlicher Größe;
- Fig. 3:: eine andere Ausführungsform der Erfindung;
- Fig. 4:: eine planarisierte Aufsicht auf die Entwurfsvorrichtung in Fig. 3;
- Fig. 5:: eine Veranschaulichung des Funktionsprinzips der Endentwurfs-Teileinheit.

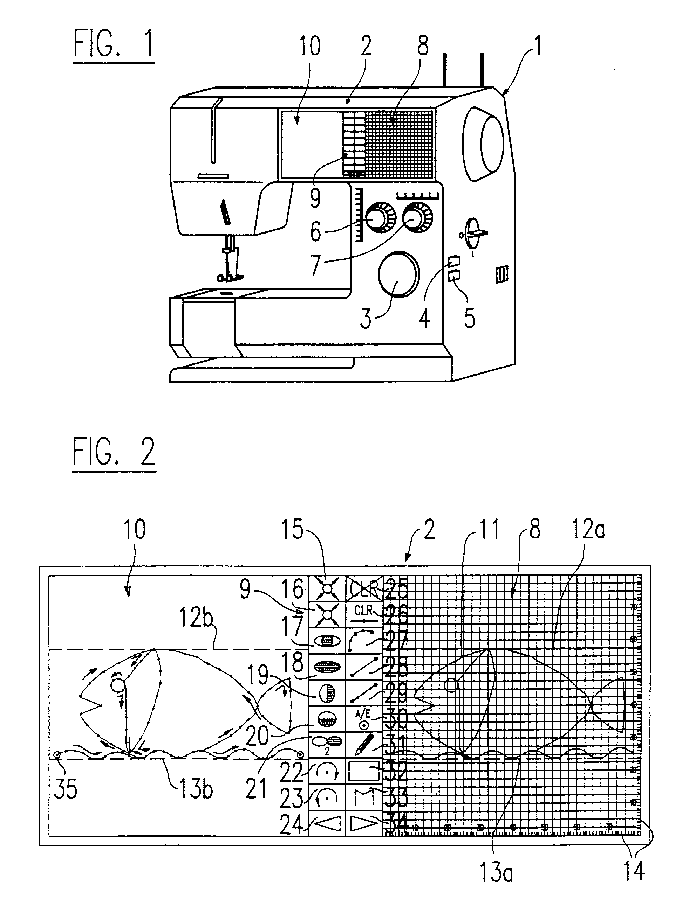

Fig. 1 zeigt eine elektronisch gesteuerte Nähmaschine 1 mit der in das Gehäuse integrierten Entwurfseinheit 2. Ebenfalls vorhanden sind ein Trackball 3 sowie zwei Eingabetasten 4 ("OK") und 5 ("CLR"). Die OK-Taste 4 dient im allgemeinen dazu, an dem Ort, an dem sich der über den Trackball gesteuerte Cursor befindet, eine Funktion auszulösen. Die CLR-Taste 5 erlaubt es generell, die zuletzt über die Taste 4 ausgelöste Aktion rückgängig zu machen. In Verbindung mit der Entwurfseinheit stehen insbesondere noch der Einsteller für die Stichlänge 6, die Stichbreite 7 und das nicht dargestellt Mittel zum Starten des Näh- bzw. Stickvorganges, üblicherweise in der Art eines Fußpedals. Die weiteren Vorrichtungen und Bedienungselemente sind von konventioneller Natur und für die Beschreibung der Erfindung ohne Belang.

Fig. 2 zeigt eine schematisierte Aufsicht auf die Entwurfseinheit. Sie besteht aus der Anzeige für den Rohentwurf 8, eine in der Mitte angeordnete Menüleiste 9, und die Endmusteranzeige 10. Als Technologie für Anzeigen dieser Art sind Flüssigkristalle üblich. Die Anzeigen zeigen aus naheliegenden Gründen eine Vergrößerung der entworfenen Muster. Ein Menüpunkt der Menüleiste wird ausgewählt, und damit die entsprechende Funktion, soweit im gerade herrschenden Betriebszustand möglich, zur Ausführung gebracht, indem der Cursor durch Betätigen des Trackballs 3 in das entsprechende Funktionsfeld geführt wird und dann die OK-Taste 4 betätigt wird.

Das Rohentwurfsfenster 8 zeigt außer dem Nähmuster 11, hier in der Form eines Fisches, Hilfslinien 12a und 13a, die die maximale seitliche Auslenkung der Nadel kennzeichnen, sowie ein Raster und seitliche Rasterskalen 14. Über die Hilfslinien 12a und 13a kann nicht hinausgezeichnet werden. Die volle Fläche der Anzeige kann ausgenützt werden, wenn ein steuerbarer Stickrahmen oder eine seitlich versetzbarer Stoffschieber vorhanden sind bzw. zusätzlich angebracht werden, wodurch die Hilfslinien ausgeblendet werden. Für den Entwurf des Musters stellen die Dimension der Anzeige und gegebenenfalls die größtmögliche Nadelauslenkung die Mustergrenzen dar, auf die alle Entwurfsmöglichkeiten begrenzt sind.

Das Muster wird zunächst in der Art einer Freihandzeichnung unter Verwendung des Trackballs in der Rohentwurfsanzeige erstellt, nachdem diese zur Eingabe durch Anwählen des Menüpunktes 34: "Rechte Anzeige aktiv" in der Menüleiste aktiviert und, falls noch ein Bild 11 vorhanden war, dieses durch Anwählen des Menüsymbols 25: "Inhalt aktive Anzeige Löschen" gelöscht wurde. Ohne das Löschen kann das vorhandene Bild verbessert oder erweitert werden. Änderungen am Rohentwurf werden jederzeit in dem dem Muster zugeordneten Speicher mitgeführt. Im Gegensatz dazu wird der Rohentwurf als Bearbeitungshilfe erst nach Anwählen der Funktion 24: "Anzeige links aktivieren" in die Endmusteranzeige 10 überführt. Ein evtl. in dieser Anzeige eingeblendeter vorheriger Rohentwurf wird automatisch vorher gelöscht. Ein bereits vorhandener, auf einem älteren Rohentwurf basierendes Endmuster wird erst durch den Menüpunkt 25: "Inhalt aktive Anzeige Löschen" entfernt, wobei wiederum der eingeblendete Rohentwurf erhalten bleibt.

Nach Anwahl des Menüsymbols 30: "Anfang/Ende" wird nun beginnend beim Anfangspunkt 35 der Rohentwurf durch Einzelstiche nachgezogen, wobei Unzulänglichkeiten des Rohentwurfs ausgeglichen werden können. Im einfachsten Fall wird nach Anwählen des Menüsymbols 29 eine gerade Linie über Anfangs- und Endpunkt derselben definiert, wobei die Entwurfseinheit diese Linie automatisch durch gleichlange Stiche ersetzt, deren maximale Länge am Stichlängenregler 6 eingestellt wird. Der Anfangspunkt wird definiert, indem der Cursor durch Betätigen des Trackballs 3 zur gewünschten Position bewegt wird und die OK-Taste 4 gedrückt und gedrückt gehalten wird. Der Cursor wird zur Position des Endpunktes des Stichs geführt und die OK-Taste 4 losgelassen, womit die Linie festgelegt ist. Solange der Anfangspunkt definiert ist, der Endpunkt jedoch nicht, wird dauernd eine Linie dargestellt, die vom Anfangspunkt zum Cursor verläuft. Es kann auch eine Linie ohne Unterteilung in Stiche durch Selektieren des Menüsymbols 28: "Gerade ohne Zwischenstiche" erzeugt werden, um einen Verbindungsfaden zu erzeugen. Das Ende und der Anfang eines Musters bzw. -teils kann durch Anwahl von "Anfangs/Endpunkt" 30 markiert werden, wodurch an diesen Stellen automatisch eine Verwahrungsstichfolge ausgeführt wird.

Kreisbögen können durch Selektieren von Menüpunkt 27: "Kreisbogen" erzeugt werden. Der Kreisbogen wird durch drei Punkte definiert, jeweils durch Anfahren mit dem Cursor und kurzes Betätigen der OK-Taste 4.

Schließlich ist auch das Festlegen einzelner Stiche durch Anwahl von Menüpunkt 31 möglich. Die Funktion ist analog dem Ziehen eines Verbindungsfadens, die Länge ist jedoch auf die eingestellte Stichlänge begrenzt. Diese maximale Länge wird z. B. durch einen Kreis um die Ausgangseinstichstelle verdeutlicht. Teile der Kreislinie können dabei abgeschnitten sein, wenn der Kreis über eingestellte Grenzen hinausragt, wie z. B. die Hilfslinien 12b und 13b, und sind dann durch entsprechende Sehnen ersetzt. Diese Begrenzung der grafischen Funktionen auf die von der Maschine vorgegebenen Grenzen stellt eine wichtige Hilfe beim Entwurf der Muster dar.

Zusätzlich zu den physikalisch, z. B. über die maximale Nadelauslenkung vorgegebenen Mustergrenzen kann der Benutzer durch Anwahl des Menüpunkts 32: "Rahmen" einen zusätzlichen Rahmen einrichten. Der Rahmen kann innerhalb der oben genannten Grenzen verschoben werden und begrenzt ebenfalls alle weiteren Entwurfsfunktionen. Der Rahmen kann beim Entwurf von Monogrammen vorteilhaft eingesetzt werden, um Zeichen gleicher Größe sicherzustellen. Der Rahmen wird durch Anfahren des Menüpunkts 32 und Betätigen der OK-Taste 4 in Kraft gesetzt und auf der gerade aktiven Anzeige (8,10) angedeutet. Solange keine andere Menüfunktion gewählt wird, kann der Rahmen auf folgende Art manipuliert werden: Wird der Cursor in den Rahmen gefahren und die OK-Taste gedrückt, so folgt der Rahmen innerhalb der Mustergrenzen (12,13) dem Cursor, solange die OK-Taste gedrückt bleibt. Befindet sich der Cursor dagegegen außerhalb des Rahmens, und wird die OK-Taste betätigt, so bewegt sich die nächstgelegene Ecke des Rahmens zur aktuellen Cursorposition bzw. innerhalb der Mustergrenzen möglichst nahe dazu hin. Wird der Cursor auf den Menüpunkt 32 gesetzt und anstatt der OK-Taste 4 die CLR-Taste 5 betätigt, so wird die Darstellung des Rahmens von der Anzeige entfernt und die Begrenzungswirkung ausgesetzt, die Position und Ausdehnung des Rahmens bleiben jedoch erhalten.

Auf das gesamte Muster können Spiegelung in Nährichtung (Menüpunkt "Spiegeln vorwärts" 19) und quer dazu (Menüpunkt "Spiegeln seitwärts" 20), "Muster verlängern" 17 und "Muster verkürzen" 18 bei konstanter Stichlänge, "Muster vergrößern" 15 und "Muster verkleinern" 16, "Muster nach rechts drehen" 22 und "Muster nach links drehen" 23, stufenlos oder in Einheiten von z. B. 10°, "Muster wiederholen" 21 mit Wiederholungsfaktoren zwischen 1 bis 9, "Muster in der aktiven Anzeige löschen" 25 und "Löschen eines Einstichs" 26 durch Anwahl im Menü angewandt werden. Die im Menüpunkt "Muster wiederholen" 21 abgebildete Ziffer gibt als Beispiel an, daß das Muster zweimal nacheinander genäht wird, wonach die Maschine automatisch anhält. Die Ziffer wird jeweils um 1 erhöht, wenn bei auf dieses Menüfeld gerichtetem Cursor die OK-Taste 4 betätigt wird, bzw. durch Betätigen der "CLR"-Taste um 1 vermindert. Ein Wiederholungsfaktor 0 entspricht dabei einer unbegrenzten Wiederholung des gerade angezeigten Musters.

Das fertige Endmuster wird durch Anwahl von "Speichern" 33 im Speicher abgelegt und kann mittels des geläufigen Fußpedals abgerufen und genäht werden, wobei vorzugsweise der Nähverlauf auf der Anzeige angezeigt wird.

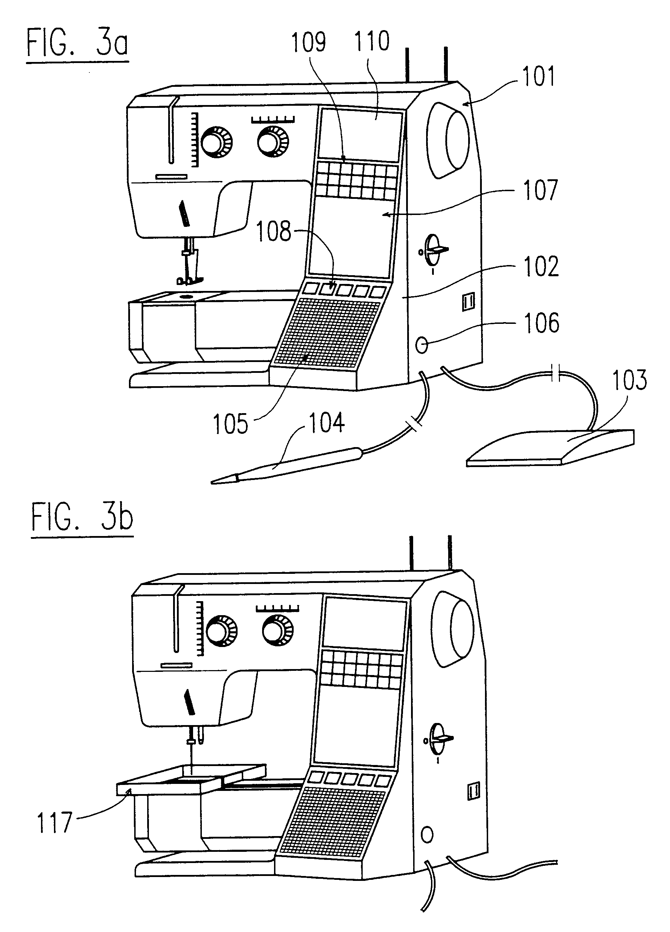

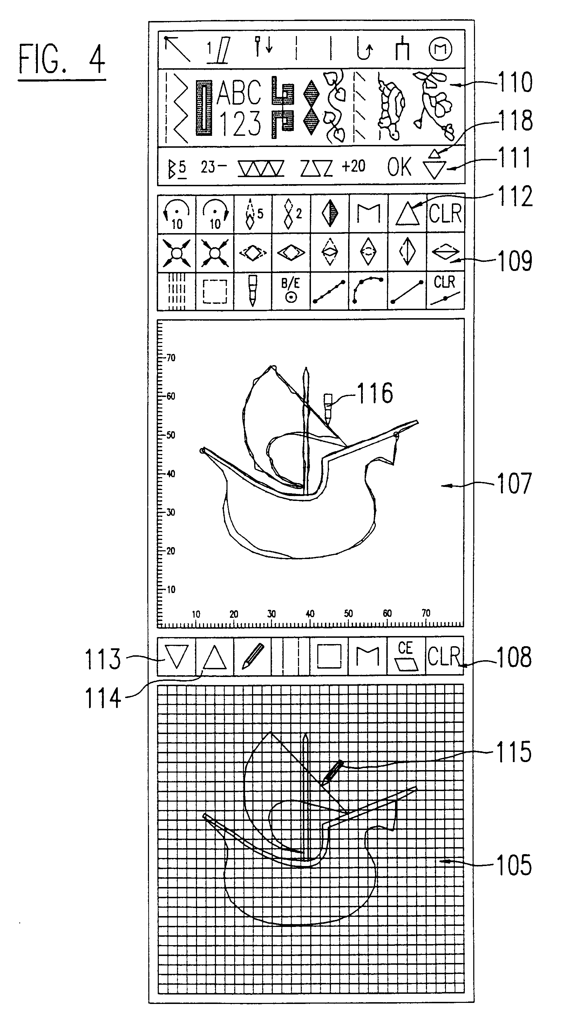

Fig. 3 zeigt eine andere Ausführung einer Nähmaschine 101 mit Musterentwurfseinheit 102. In Fig. 3a ist ein über ein Kabel mit der Maschine verbundener Trackball 103 sowie ein Griffel 104 gezeigt, der mit Hilfe der als Digitalisierbrett ausgebildeten Rohentwurfsanzeige 105 zur Eingabe des Rohentwurfs dient. Der Griffel 104 kann bei Nichtgebrauch in dem Griffelschacht 106 verstaut werden. Die Anzeige der Entwurfseinheit ist als planarisierte Aufsicht in Fig. 4 in ungefähr natürlicher Größe abgebildet. Über der Rohentwurfsanzeige 105 ist die Anzeige für das Endmuster 107 angeordnet, dazwischen befindet sich die Menüanzeige 108 für die Steuerung der Entwurfseinheit. Über der Endmusteranzeige 107 ist das grafische Menü 109 angeordnet, und darüber das Menü 110 für die Auswahl vordefinierter Muster sowie die üblichen Steuerfunktionen einer Nähmaschine. Eine Besonderheit dieser Ausführung ist die Möglichkeit, ein vordefiniertes Muster aus dem Menü 110 auszuwählen und in die Endmusteranzeige 107 zu kopieren. Das Umschalten zwischen der Entwurfseinheit 102 und dem Standardmenü 110 erfolgt über die Menüpunkte 112: "Standardmenü aktivieren" und 111: "Gewähltes Muster in die Entwurfseinheit kopieren und Endwurfseinheit aktivieren". Durch Selektieren von 114: "Endmusteranzeige aktiv" und 113: "Rohentwurfanzeige aktiv" kann zwischen den beiden Entwurfsmodi umgeschaltet werden.

Das Erstellen des Rohentwurfs erfolgt hier besonders schnell und unkompliziert mittels des Digitalisierstifts 104. Der Trackball 103 erlaubt ebenfalls die Steuerung des Kursors 115 in der Rohentwurfsphase, darüber hinaus auch die Steuerung des Kursors 116 während der Bearbeitung des Endmusters, der hier als Nadel symbolisiert ist, und die Anwahl aller dargestellten Elemente der Menüs 108, 109 und 110. Die auswahl vordefinierter Muster erfolgt mit dem Kursor 118 bzw. durch "Blättern" in den Standardmenüs 110 mittels des Pfeilsymbols 119. Fig. 3b zeigt eine Maschine dieses Typs mit einem gesteuerten Stickrahmen 117, der die Ausnutzung der gesamten Anzeigenflächen 105 bzw. 107 für den Entwurf eines Musters ermöglicht, während bei der Maschine gemäß Fig 3a die größte mögliche Nadelauslenkung quer zur Nährichtung die größte Breite des Musters begrenzt.

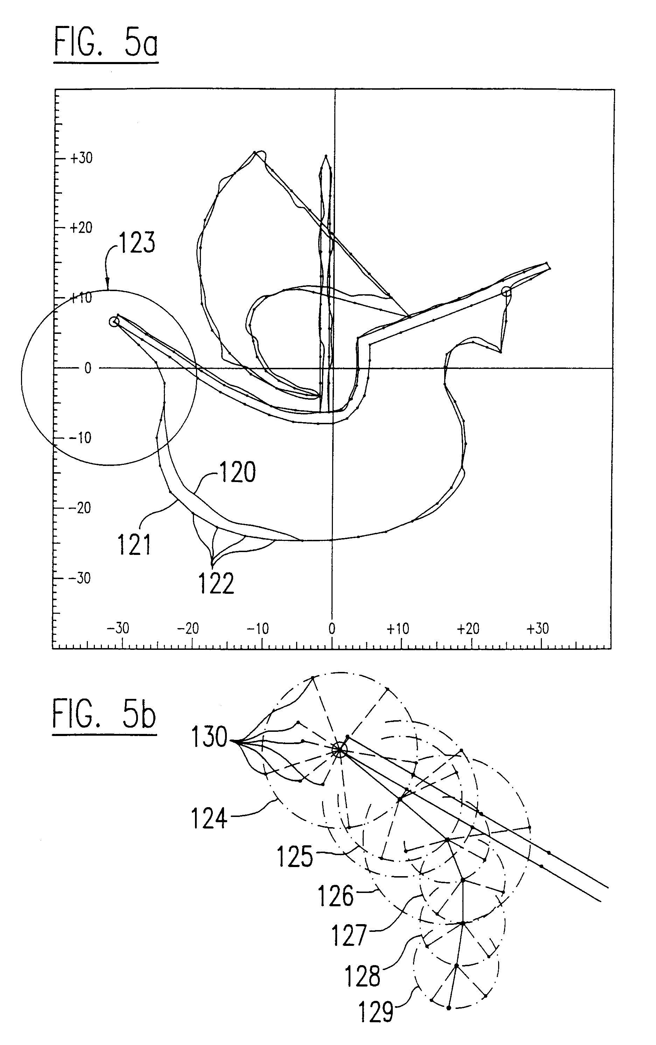

Fig. 5a zeigt die Endmusteranzeige noch einmal vergrößert. Die Linie 120 ist die von der Rohentwurfsanzeige übernommene Freihandzeichnung, Linie 121 zeigt das Endmuster mit den angedeuteten Einstichspunkten 122. In Fig. 5b ist das Vorgehen während des Entwurfs des Endmusters noch einmal durch Vergrößerung des in Fig. 5a eingekreisten Musterteils 123 verdeutlicht. Der jeweilige Radius der Kreise 124 bis 129 entspricht der gerade aktuellen Stichlänge, innerhalb der Kreislinie sind jeweils einige mögliche Stichendpunkte 130 angezeigt. Um die gekrümmte Linie besser anzunähern, wurde während des Festlegens der Stiche 127, 128 und 129 eine kleinere Stichlänge eingestellt.

Im Rahmen des Erfindungsgedankens sind natürlich noch andere Ausführungen möglich. Es können mehrere Muster nacheinander entworfen und in jeweils eigenen Speichern abgelegt werden. Die Muster können dann jeweils für sich verwendet werden oder in einer beliebig vorgebbaren Reihenfolge nacheinander automatisch ausgeführt werden, wobei jedes Muster innerhalb der Sequenz wiederum entsprechend dem Wiederholfaktor für sich wiederholt wird. Anwendungen hierfür ergibt sich z. B. aus dem Entwurf von Monogrammen. Vorteilhaft ist auch die Verwendung eines nichtflüchtigen Speichers, um die entworfenen Muster über lange Zeit zur Verfügung zu haben, ohne die Maschine dauernd angeschaltet lassen zu müssen. Für den Entwurf komplizierterer Muster kann auch eine Lupenfunktion vorgesehen werden, die einen Bereich vergrößert darstellt und damit die Bearbeitung erleichtert.

Anstelle von zwei Anzeigen kann auch eine einzige Anzeige für Roh- und Endentwurf vorgesehen sein. Die Funktion wird dabei durch eine Umschaltfunktion bestimmt. Vorteilhaft würde dafür eine Menüfunktion verwendet, in deren Aktivierungsfeld zugleich angegeben wird, in welchem Zustand sich die Anzeige befindet.

Für den Rohentwurf wie auch für die Bearbeitung des Endmusters können weitere grafische Grundfunktionen zur Verfügung stehen, wie Kreisbögen mit beliebigem Winkel und Radius, Ellipsen, gefüllte Flächen, insbesondere Rechtecke. Durch eine "Lasso"-Funktion könnten beliebige Ausschnitte markiert und gelöscht, kopiert, verschoben oder vervielfältigt werden.

Es könnten die Eingabe von Text bzw. Zahlen durch eine alphanumerisches Menü oder auch durch Anschluß einer Tastatur ermöglicht werden. Der Text, z. B. ein Name, könnte dann zusätzlich verziert werden. Eine Möglichkeit zur grafischen Ausgestaltung eines oder mehrerer Zeichensätze in der Maschine wäre ebenfalls denkbar.

Die Vorrichtung könnte mit einer Anschlußmöglichkeit für einen externen Speicher, einen Computer usw. versehen sein, um die Muster extern zu speichern, weiter zu bearbeiten und/oder Muster in die Maschine zu laden.

## Patentansprüche

1. Vorrichtung zur Erstellung von Näh- und Stickmustern, dadurch gekennzeichnet, daß Mittel (2-5, 102-104) vorhanden sind, um einen Rohentwurf des Musters digital erfassen und auf einer grafischen Anzeige (8,105) darstellen zu können, daß der Rohentwurf gespeichert wird, daß weitere Mittel (3-5,9,10,103,104,107,108) vorhanden sind, um den Rohentwurf verbessern und in ein Endmuster, d. h. in Arbeitsschritte einer Näh- oder Stickmaschine umsetzen zu können, wobei der obengenannte Rohentwurf selbst nicht verändert wird und als Vorlage zur Verfügung steht und wobei jederzeit das durch die Ausführung der bis dahin definierten Arbeitschritte realisierte Endmuster schematisch auf einer grafischen Anzeige (10,107) veranschaulicht wird.

2. Vorrichtung gemäß Anspruch 1, dadurch gekennzeichnet, daß die Vorrichtung (2,3-5,102-104) ein integraler Bestandteil einer Näh- oder Stickmaschine (1,101) ist.

3. Vorrichtung gemäß einem der Ansprüche 1 bis 2, dadurch gekennzeichnet, daß der Rohentwurf und das Endmuster auf einer Anzeigeeinheit (10,107) gleichzeitig dargestellt werden können.

4. Vorrichtung gemäß einem der Ansprüche 1 bis 3, dadurch gekennzeichnet, daß der Rohentwurf auf einer eigenen Anzeigeeinheit (8,105) entworfen und dauernd dargestellt werden kann, und daß die Anzeigeeinheit (10,107) für die Erstellung des Endmusters mindestens die gleiche Auflösung besitzt wie diejenige zur Erstellung des Rohentwurfs (8,105).

5. Vorrichtung gemäß einem der Ansprüche 1 bis 4, dadurch gekennzeichnet, daß mindestens eines der folgenden Eingabemittel vorhanden sind:
eine Maus,
ein Track- oder Rollball (3,103),
ein Joystick oder Steuerknüppel,
eine Tastatur,
ein Digitalisierbrett mit Griffel (104,105),
ein Touchscreen.

6. Vorrichtung gemäß einem der Ansprüche 1 bis 5, dadurch gekennzeichnet, daß oft benötigte oder aufwendig entwerfbare grafische und technische Funktionen aus einem Menü (9,109) ausgewählt werden können, mit Hilfe der Eingabemittel angepaßt werden können und die Umsetzung in Arbeitschritte der Nähmaschine automatisch erfolgen kann.

7. Vorrichtung gemäß einem der Ansprüche 1 bis 6, dadurch gekennzeichnet, daß das Muster oder Teilbereiche davon grafischen Transformationen unterworfen werden können.

8. Vorrichtung gemäß einem der Ansprüche 1 bis 7, dadurch gekennzeichnet, daß ein Arbeitschritt aus einem Stich einer Nähmaschine besteht, dessen Anfangspunkt entweder durch den Endpunkt des vorhergehenden Stichs oder durch den Benutzer vorgegeben ist, daß der Endpunkt eines solchen Stichs, ausgehend von diesem Anfangspunkt, nach Wahl des Benutzers entweder innerhalb eines kreises, dessen Radius durch die voreingestellte Stichlänge gegeben ist, freigewählt werden kann, oder beliebig gewählt werden kann, und daß zumindest eine grafische Anzeige des Stichs zusammen mit den vorhergehend erstellten Stichen erfolgt, wobei die dem Zustand des Eingabemittels (3,103-104) entsprechende Ausführung des Stichs jederzeit ersichtlich ist.

9. Vorrichtung gemäß einem der Ansprüche 1 bis 8, dadurch gekennzeichnet, daß die Anzeige des Endmusters (10,107) die einzelnen Arbeitsgänge veranschaulichen kann, aus denen sich dieses bei der Ausführung zusammensetzt.

10. Vorrichtung gemäß einem der Ansprüche 1 bis 9, dadurch gekennzeichnet, daß der Rohentwurf wie auch das Endmuster in der Vorrichtung gespeichert oder gelöscht sowie von der Vorrichtung auf andere geeignete Geräte übertragen werden kann, um eine Speicherung auf Datenträgern, Eingabe in eine andere Vorrichtung oder Wiedereingabe in die Vorrichtung, oder die digitale oder analoge Weiterverarbeitung zu ermöglichen.

11. Vorrichtung gemäß einem der Ansprüche 1 bis 10, dadurch gekennzeichnet, daß innerhalb des Musters Farbwechsel vorgegeben werden können.

12. Vorrichtung gemäß einem der Ansprüche 1 bis 11, dadurch gekennzeichnet, daß nach Vorgabe der Umrandung einer Fläche automatisch eine Arbeitsschrittfolge für die Näh- oder Stickmaschine generiert wird, die bei der Ausführung das Bedecken der Fläche mit Nähten oder Stickereien bewirkt.

13. Vorrichtung gemäß einem der Ansprüche 1 bis 12, dadurch gekennzeichnet, daß ein oder mehr Muster unabhängig voneinander entworfen werden können, daß diese Muster als Sequenz entweder nacheinander oder in einer vom Benutzer vorgegebenen Reihenfolge nacheinander ausgeführt werden und daß die Muster sich ein- oder mehrfach in der Sequenz wiederholen können.

14. Vorrichtung gemäß einem der Ansprüche 1 bis 13, dadurch gekennzeichnet, daß die Muster in der Maschine in von einer externen Stromversorgung unabhängigen, veränderlichen und digitalen Speichern gehalten werden.

15. Vorrichtung gemäß einem der Ansprüche 1 bis 14, dadurch gekennzeichnet, daß ein Teil oder alle der in der Nähmaschine gespeicherten Muster mittels der Vorrichtung verändert werden können.

16. Vorrichtung gemäß einem der Ansprüche 1 bis 15, dadurch gekennzeichnet, daß bei der Bearbeitung des Musters entprechend den Möglichkeiten der Näh- oder Stickmachine Grenzen vorgegeben und in der Anzeige (8,10,105,107) angedeutet werden können, und daß diese Grenzen während des Entwurfs nicht überschritten werden können.

17. Vorrichtung gemäß einem der Ansprüche 1 bis 16, dadurch gekennzeichnet, daß der Benutzer einen verschiebbaren Rahmen vorgeben kann, auf den alle folgenden Entwurfsschritte begrenzt sind, bis der Rahmen wieder ausgeschaltet wird, und daß der Rahmen auf der Anzeige (8,10,105,107) angedeutet wird.

## Claims

1. Apparatus for generating stitch patterns for sewing and embroidery, characterised in that means (2 - 5, 102 - 104) are provided for digitally seizing a raw draft of the pattern and for displaying it on a graphical display (8, 105), that the raw draft is stored, that further means (3 - 5, 9, 10, 103, 104, 107, 108) are provided to improve the raw draft and to transform it into a final pattern, i.e. into working steps of a sewing or embroidering machine, said above mentioned raw draft not being modified and remaining available as a model, and the final pattern realised by the execution of the working steps at any time being continuously schematically illustrated on a graphical display (10, 107).

2. Apparatus according to claim 1, characterised in that the apparatus (2, 3 - 5, 102 - 104) is an integrated part of a sewing or embroidering machine (1, 101).

3. Apparatus according to any one of claims 1 to 2, characterised in that the raw draft and the final pattern can be simultaneously displayed on a display unit (10, 107).

4. Apparatus according to any one of claims 1 to 3, characterised in that the raw draft can be designed on an own display unit (8, 105) and continuously displayed thereon, and that the display unit (10, 107) for establishing the final pattern has at least the same resolution as that for the designing of the raw draft (8, 105).

5. Apparatus according to any one of claims 1 to 4, characterised in that that at least one of the following entering means is provided:
a mouse,
a trackball or roller ball (3, 103),
a joystick,
a keyboard,
a digitising board with stylus (104, 105),
a touchscreen.

6. Apparatus according to any one of claims 1 to 5, characterised in that graphical and technical functions which are often necessary or complex to establish can be selected from a menu (9, 109) and adapted with the aid of the entering means, and that the transformation into working steps of the sewing machine can be effected automatically.

7. Apparatus according to any one of claims 1 to 6, characterised in that the pattern or portions thereof can be subjected to graphical transformations.

8. Apparatus according to any one of claims 1 to 7, characterised in that one working step consists in one stitch of a sewing machine whose starting point is defined either by the end point of the preceding stitch or by the user, that the end point of such a stitch, beginning with this starting point, can either freely be selected by the user within a circle whose radius is defined by the predetermined stitch length, or in any other manner, and that at least a graphical display of the stitch together with the previously executed stitches is effected, the executed stitch corresponding to the status of the entering means (3, 103 - 104) being visible at any time.

9. Apparatus according to any one of claims 1 to 8, characterised in that the display of the final pattern (10, 107) can illustrate the individual working steps which form the pattern during its execution.

10. Apparatus according to any one of claims 1 to 9, characterised in that the raw draft as well as the final pattern can be stored or deleted in the apparatus or can be transferred from the apparatus to other appropriate devices in order to enable the storing on data carriers, entering into another device or re-entry into the apparatus, or the digital or analogue processing.

11. Apparatus according to any one of claims 1 to 10, characterised in that colour modifications can be preset within the pattern.

12. Apparatus according to any one of claims 1 to 11, characterised in that, on setting the edging of a surface area, a working step sequence is automatically generated for the sewing or embroidering machine which produces on execution the covering of the surface area by sewing stitches or embroideries.

13. Apparatus according to any one of claims 1 to 12, characterised in that one or more patterns can independently be designed, that these patterns are executed as a sequence either successively or in a sequence preset by the user, and that the patterns can be repeated once or several times within the sequence.

14. Apparatus according to any one of claims 1 to 13, characterised in that the patterns are kept in the machine in variable and digital memories which are independent of an external power supply.

15. Apparatus according to any one of claims 1 to 14, characterised in that part of or all patterns stored in the sewing machine can be changed by means of the apparatus.

16. Apparatus according to any one of claims 1 to 15, characterised in that limits can be preset and indicated on the display (8, 10, 105, 107) in processing the patterns corresponding to the possibilities of the sewing or embroidering machine, and that these limits cannot be crossed during the establishment of the draft.

17. Apparatus according to any one of claims 1 to 16, characterised in that the user can preset a displaceable frame to which all following design steps are limited until the frame is turned off, and that the frame is indicated on the display (8, 10, 105, 107).

## Revendications

1. Dispositif pour l'établissement de motifs de couture et de broderie, caractérisé en ce que des moyens (2 à 5, 102 à 104) sont prévus pour saisir de manière digitale un croquis brut du motif et pour le représenter sur un affichage graphique (8, 105), que le croquis brut est enregistré, que d'autres moyens (3 à 5, 9, 10, 103, 104, 107, 108) sont prévus pour améliorer le croquis brut et le transformer en un motif définitif, à savoir en étapes de travail d'une machine à coudre ou à broder, le croquis brut mentionné n'étant lui-même pas modifié et restant à disposition comme modèle, le motif définitif réalisé par les étapes de travail définis jusqu'à un moment donné étant à tout moment représenté sur un affichage graphique (10, 107).

2. Dispositif selon la revendication 1, caractérisé en ce que le dispositif (2, 3 à 5, 102 à 104) est une partie intégrante d'une machine à coudre ou à broder (1, 101).

3. Dispositif selon l'une quelconque des revendications 1 et 2, caractérisé en ce que le croquis brut et le motif définitif peuvent être représentés simultanément sur une unité d'affichage (10, 107).

4. Dispositif selon l'une quelconque des revendications 1 à 3, caractérisé en ce que le croquis brut peut être esquissé et représenté en continu sur une propre unité d'affichage (8, 105), et que l'unité d'affichage pour la réalisation du motif définitif (10, 107) présente au moins la même résolution que celle pour la réalisation du croquis brut (8, 105).

5. Dispositif selon l'une quelconque des revendications 1 à 4, caractérisé en ce qu'au moins un des moyens d'entrée suivants est présent:
une souris,
un trackball ou une bille roulante (3, 103),
un joystick ou une manche à balai,
un clavier,
une planche à digitaliser avec crayon (104, 105),
un écran à touche.

6. Dispositif selon l'une quelconque des revendications 1 à 5, caractérisé en ce que les fonctions graphiques et techniques souvent nécessaires ou difficilement à réaliser peuvent être choisies dans un menu (9, 109) et peuvent être adaptées à l'aide des moyens d'entrée, et que la transformation en étapes de travail de la machine à coudre peut être effectuée automatiquement.

7. Dispositif selon l'une quelconque des revendications 1 à 6, caractérisé en ce que le motif ou ses parties peuvent être soumis à des transformations graphiques.

8. Dispositif selon l'une quelconque des revendications 1 à 7, caractérisé en ce qu'une étape de travail comprend un point d'une machine à coudre dont le départ est défini ou bien par la fin du point précédent ou bien par l'utilisateur, que la fin d'un tel point, partant de ce départ, peut être choisi par l'utilisateur ou bien dans un cercle dont le rayon est donné par la longueur du point préréglée, ou bien de manière facultative, et qu'au moins un affichage graphique du point avec les points précédents est effectué, l'exécution du point correspondant à l'état du moyen d'entrée (3, 103 à 105) étant visible à tout moment.

9. Dispositif selon l'une quelconque des revendications 1 à 8, caractérisé en ce que l'affichage du motif définitif (10, 107) est apte à illustrer les étapes de travail individuelles qui forment le dit motif lors de l'exécution.

10. Dispositif selon l'une quelconque des revendications 1 à 9, caractérisé en ce que le croquis brut et également le motif définitifs peuvent être enregistrés dans le dispositif ou effacés de celui-ci ou bien être transmis du dispositif à d'autres appareils appropriés afin de rendre possible un enregistrement sur des supports de données, l'entrée dans un autre dispositif ou l'entrée à nouveau dans le dispositif, ou bien un traitement ultérieur digital ou analogique.

11. Dispositif selon l'une quelconque des revendications 1 à 10, caractérisé en ce que des changements de couleur peuvent être prévus à l'intérieur du motif.

12. Dispositif selon l'une quelconque des revendications 1 à 11, caractérisé en ce que, après l'entrée du contour d'une surface, une séquence d'étapes de travail est générée pour la machine à coudre ou à broder ce qui a pour effet, lors de l'exécution, la couverture de la surface par des coutures ou des broderies.

13. Dispositif selon l'une quelconque des revendications 1 à 12, caractérisé en ce qu'un ou plusieurs motifs peuvent être créés indépendamment l'un de l'autre, que ces motifs sont exécutés l'un après l'autre ou bien comme séquences ou bien dans un ordre donné par l'utilisateur, et que les motifs peuvent se répéter une ou plusieurs fois dans la séquence.

14. Dispositif selon l'une quelconque des revendications 1 à 13, caractérisé en ce que les motifs sont retenus dans la machine par des mémoires variables et digitales ne dépendant pas d'une alimentation en courant externe.

15. Dispositif selon l'une quelconque des revendications 1 à 14, caractérisé en ce qu'une partie ou la totalité des motifs enregistrés dans la machine à coudre peuvent être modifiés au moyen du dispositif.

16. Dispositif selon l'une quelconque des revendications 1 à 15, caractérisé en ce que, lors du travail du motif selon les possibilités de la machine à coudre ou à broder, des limites peuvent être préétablies et indiquées sur l'affichage (8, 10, 105, 107), et que ces limites ne peuvent pas être dépassées au cours de l'établissement du croquis.

17. Dispositif selon l'une quelconque des revendications 1 à 16, caractérisé en ce que l'utilisateur peut prescrire un cadre déplaçable limitant toutes les étapes suivantes du croquis jusqu'à ce que le cadre sera déclenché, et que le cadre sera indiqué sur l'affichage (8, 10, 105, 107).
